# EUROPEAN PATENT SPECIFICATION

(11) **EP 1 095 703 B1**
(45) Date of publication and mention of the grant of the patent: **03.01.2007**
(21) Application number: 00123148.9
(22) Date of filing: 25.10.2000
(51) Int. Cl.: B01L 3/02, B01J 20/26

(54) **Pipette tip with sintered-polymer filter**
Pipettenspitze mit Filter aus gesintertem Polymer
Pointe de pipette à filtre en polymères frittés

(30) Priority: 26.10.1999 JP 30390799
(43) Date of publication of application: 02.05.2001
(73) Proprietor: NITTO DENKO CORPORATION, Osaka (JP)
(72) Inventor: Moriyama, Junichi, c/o Nitto Denko Corporation, Ibaraki-shi, Osaka (JP); Wano, Takashi, c/o Nitto Denko Corporation, Ibaraki-shi, Osaka (JP)
(74) Representative: Grünecker, Kinkeldey, Stockmair & Schwanhäusser Anwaltssozietät

(56) References cited:
- WO-A-96/35499
- WO-A-99/00193
- US-A- 5 648 271
- US-A- 5 833 927

## Description

The present invention relates to a pipette to be attached to the nozzle of a liquid suction apparatus upon examination of the blood or the like; and a filter attached to the pipette.

Upon examination of the body liquid such as blood, or urine, a pipette (dropper-type tip) is attached to the nozzle of a liquid suction apparatus and a predetermined amount of a test liquid is suctioned from and reserved in the pipette. This test liquid is then dispensed into test cuvettes by releasing suction. To the test liquid in each of the test cuvettes, a reagent is poured in a similar manner to the above.

Upon dispensation of a test liquid or reagent as described above, it is necessary that the nozzle of a suction apparatus is free from adhesion and contamination with the test liquid or reagent and if the suction is not conducted in a clean room, the nozzle is free from adhesion and contamination with a dust in the air or the like.

It is therefore the common practice to insert, in a pipette, a filter made of a polypropylene fiber bundle or polyethylene terephthalate fiber bundle, or an urethane foam filter, thereby preventing the passage of a test liquid or reagent or cleaning the air.

Such filters are however accompanied with the problem that since they are soft with a low modulus elasticity, they tend to move by a suction pressure applied upon suction of a liquid, making it difficult to maintain a predetermined volume of a reservoir upstream of the filter and dispense a fixed amount of the liquid with high precision.

For recycling or reducing an amount of trash, a filter is required to be used in repetition after sterilizing treatment in an autoclave or the like when used for the same kind of a test liquid or reagent. The above-described filter made of a plastic fiber bundle however cannot continue to have a normal filter function if subjected to such a treatment, because by the steam heat, shrinkage of the fibers occur owing to a residual stress upon stretching, leading to shrinkage in the diameter of the filter.

It was the object of the present invention to provide a pipette which can dispense a fixed amount of a liquid with high precision and can be used in repetition even after autoclave treatment.

WO-A-99/00193 discloses a membrane filter pipette tip comprising a hollow tube having a relatively large open upper end for seating on a lower end of a pipette tip mounting shaft of a pipette device and a relatively small open lower end for passing fluid into the lower end of the tube upon operation of the pipette device, and an open channel between the upper and lower ends of the tube; and a porous membrane secured within and across the open channel for passing air drawn into the open lower end of the pipette tip.

US-A-5,648,271 relates to a method of evaporating solvent from a tube containing a sample that comprises the solvent and an analyte material, such as evaporation being commonly employed in biomedical laboratories for concentrating, purifying or recovering biopolymers, such as DNA, RNA, peptides, proteins, and saccharides. The method comprises the steps of providing a sample in a tube of sufficient volume and dimensions to contain the sample in a lower region while providing a sample free upper passageway region; providing a filter material having a longitudinal dimension capable of allowing flow through of evaporated solvent while substantially preventing the flow through of analyte material; inserting the filter material into a sealed and removable relationship to a predetermined distance into the tube passageway; and evaporating the solvent in a manner that permits the flow through of solvent and substantially prevents the flow through of analyte material.

US-A-5,833,927 relates to a device for capturing a component present in fluid, comprising a pipette tip having an open rearward end internally tapered to be a friction fit on a pipette for drawing fluid into the pipette tip, an open forward end, and at least one membrane bonded to and extending across said forward end of the pipette tip, wherein said at least one membrane is a woven or nonwoven mesh of fibers. Preferably, the membrane is adapted to bind and thereby capture a component present in the fluid, such as DNA, for example by chemical interaction or hydrophobic bonding or physical absorption or by a charge interaction.

WO-A-96/35499 relates to a filter device which is utilized with computer disk drive systems. The filter device comprises an adsorptive slurry, a first material having the slurry deposited thereon in a discrete pattern and forming an active-filtering and absorbing media area; and a permeable fabric material mounted to the first material and having the slurry trapped intermediate the first and second materials.

It was the object of the present invention to provide a pipetter which can dispense a fixed amount of a liquid with high precision and can be used in repetition even after autoclave treatment.

Said object is achieved by a pipette comprising:
a dropper-type tip; and
a filter comprising a porous sintered resin,
wherein the filter is attached to the inside of the tip,
wherein the filter further comprises a nonwoven fabric attached the front surface of a porous sintered resin so as to form a composite filter.

Said object is further achieved by a pipette filter comprising a porous sintered resin,
wherein the filter is suitable to be attached to the inside of a pipette tip, and
wherein the filter further comprises a nonwoven fabric attached the front surface of a porous sintered resin so as to form a composite filter.

Preferred embodiments are set forth in the subclaims.

FIG. 1 illustrates one example of the pipette according to the present invention.

FIG. 2 illustrates one example of the pipette filter according to the present invention.

Embodiments of the present invention will next be described with reference to accompanying drawings.

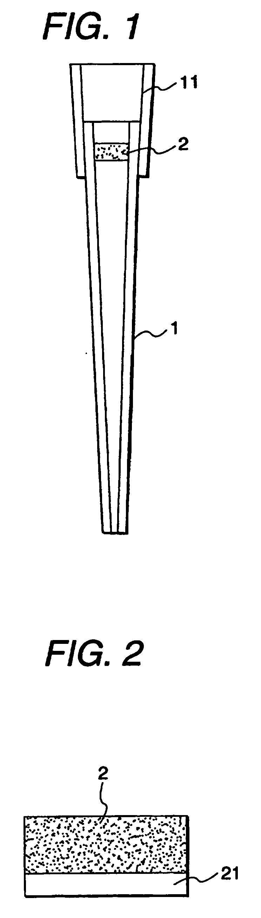

FIG. 1 illustrates one example of the pipette according to the present invention. In FIG. 1, indicated at numeral 1 is a dropper type tip which has, at the rear end thereof, a mouth tube 11 for attaching this tip to the nozzle of a suction apparatus and has equipped, inside of it, with a porous sintered resin filter 2.

The above-described dropper type chip can be produced by injection molding of a resin, such as polycarbonate, having excellent solvent resistance, acid resistance, alkali resistance, hygienic properties, dusting-free characteristics, radiation resistance, autoclave resistance and mechanical strength.

For the above-described porous sintered resin filter, a polyolefin such as ultra-high-molecular-weight polyethylene or polypropylene in the powdery form is used as a raw material. The filter has a rigid steric structure made of resin powders fused and integrated via gaps so that it usually has a compressive modulus as high as at least 200 kg/cm².

Usually, the porous sintered resin is adjusted to have a maximum inner diameter of 5 to 10 mm and a filter of the porous sintered resin is adjusted to have a thickness within a range of 0.5 to 3 mm as described later.

Prior to dispensing of a test solution or reagent by using the pipette of the present invention, the test solution or the like is suctioned in advance in the pipette attached to the nozzle of a suction apparatus at the mouth tube portion of the pipette.

In this case, since the porous sintered resin filter prevents the passage of the test solution; and the attached state of the porous sintered resin filter to the inside of the pipette can be maintained stably even if a suction pressure is applied thereto because a large compressive modulus enables attachment of the filter with a high fixing strength, a constant volume of the test solution can be reserved in a dispensing space upstream of the filter. In addition, as will be apparent from the examples which will be described later, the positioning accuracy of the porous sintered resin filter in the pipette can be heightened remarkably. The dispensing space upstream of the filter can be adjusted to have a predetermined volume with high precision and at the same time, the volume of this space can be kept constant during dispensation, which permits dispensing with high precision.

When the same kind of a test solution or reagent is dispensed, the pipette of the present invention can be used in repetition after exposure to radiation or treatment in an autoclave.

Different from a filter made of a resin fiber bundle, the porous sintered resin filter has excellent size stability against heating even if the residual stress is substantially zero so that highly precise dispensing can be maintained without changing the attaching position of the filter to the inside of the pipette even after an autoclave treatment.

The above-described porous sintered resin filter can be produced by filling, in a mold, polyolefin powders, particularly, powders of an ultra-high-molecular-weight polyethylene or polypropylene (having a viscosity-average molecular weight of 500,000 to 10,000,000, preferably 1,000,000 to 7,000,000), applying a predetermined pressure on these powders, sintering in a heating furnace kept at a temperature not lower than the melting point of the ultra-high-molecular-weight polyethylene or polypropylene, cooling the mold and releasing the resulting porous block from the mold, cutting the porous block into a sheet and then, punching out or cutting this sheet into a predetermined shape.

Alternatively, the porous sintered resin filter can be produced by filling an ultra-high-molecular-weight polyethylene or polypropylene in a mold, heating it at a temperature lower than the melting point of this polyethylene or polypropylene, applying a pressure to obtain a preform, placing this preform in a vacuum atmosphere to remove the air from the preform, sintering it in a water vapor heated to a temperature not lower than the melting point of the polyethylene or polypropylene, cooling, thereby obtaining a porous block, cutting this porous block into a sheet, and then punching out or cutting this sheet into a desired shape.

The compressive modulus or average pore size of the above-described porous sintered resin filter can be adjusted by changing the particle size of the ultra-high-molecular-weight polyethylene or polypropylene. In order to attain the compressive modulus or average pore size which will be described later, the particle size of the ultra-high-molecular-weight polyethylene or polypropylene powder is adjusted to 30 to 170 µm, preferably 100 to 170 µm.

The compressive modulus of the porous sintered resin filter may be 100 to 1000 kg/cm², preferably 200 to 400 kg/cm². A porous sintered resin usually has a compressive modulus of at least 100 kg/cm². The compressive modulus exceeding 1000 kg/cm², however, tends to make elastic compression of the porous sintered resin filter difficult, thereby preventing the smooth insertion of it in the pipette.

The average pore size of the porous sintered resin filter is usually 10 to 100 µm, preferably 20 to 40 µm. When the average pore size is less than 10 µm, a suction pressure upon dispensing must be increased to a markedly high level, sometimes making a suction work difficult. When the average pore size exceeds 100 µm, on the other hand, the passage of a test solution or the like sometimes cannot be prevented completely.

The air permeable amount of the above-described porous sintered resin filter, as measured by the Frazier method, usually ranges from 0.5 to 20 cc/cm²·sec, preferably 1 to 5 cc/cm²·sec. When it is less than 0.5 cc/cm²·sec, a suction pressure upon pouring must be increased to a markedly high level, sometimes making a suction work difficult. When it exceeds 20 cc/cm²·sec, on the other hand, difficulty is sometimes encountered in complete prevention of the passage of a test solution or the like.

As a powdery resin for the porous sintered resin filter, an ultra-high-molecular-weight polyethylene is desired from the viewpoint of solvent resistance, acid resistance, alkali resistance, hygienic properties, dusting-free properties, radiation resistance, autoclave resistance and mechanical strength. It is also possible to use polypropylene powders.

Although the thickness of the porous sintered resin filter is determined in accordance with the shape of the pipette, or test solution or reagent to be dispensed, it usually ranges from 0.5 to 3 mm, preferably 1 to 2 mm. The filter can also be adjusted to have a thickness exceeding 3 mm.

In order to disturb the passage of a liquid, the porous sintered resin filter can be subjected to water repellent treatment such as fluorine coating or another treatment for imparting water repellency. It is also possible to improve the heat resistance of the filter by increasing a crosslink density by exposure to electron beams.

It is also possible to heat laminating a nonwoven cloth 21 to the front surface of the porous sintered resin sheet 2 or to use a punched composite having a nonwoven cloth layer disposed by the melt blow method.

### Illustrating Example 1 (outside the scope of the claims)

An ultra-high-molecular-weight polyethylene having a viscosity-average molecular weight of 2,000,000 was filled in a mold, followed by heating for 6 hours at a temperature a little lower than the melting point of the polyethylene. After application of a pressure to the powdery polyethylene to adjust its density, it was sintered. The sintered product was cooled gradually at room temperature, whereby a porous rod was obtained. The resulting rod was cut into a porous ultra-high-molecular-weight polyethylene sheet having a thickness of 2 mm, compressive modulus of 250 kg/cm², air permeable amount, as measured by the Frazier method, of 1.5, porosity of 30% and average pore size of 35 µm. The sheet was punched into a 2.4 mm∅ filter.

### Illustrating Example 2 (outside the scope of the claims)

An ultra-high-molecular-weight polyethylene having a viscosity-average molecular weight of 2,000,000 was filled in a mold, followed by heating for 6 hours at a temperature a little lower than the melting point of the polyethylene. After application of a pressure to the powdery polyethylene to adjust its density, it was sintered. The sintered product was cooled gradually at room temperature, whereby a porous rod was obtained. The resulting rod was cut into a porous ultra-high-molecular-weight polyethylene sheet having a thickness of 1 mm, compressive modulus of 250 kg/cm², air permeable amount, as measured by the Frazier method, of 3, porosity of 30% and average pore size of 35 µm. The sheet was punched into a 2.4 mm∅ filter.

### Illustrating Example 3 (outside the scope of the claims)

An ultra-high-molecular-weight polyethylene having a viscosity-average molecular weight of 4,500,000 was filled in a mold, followed by heating for 6 hours at a temperature a little lower than the melting point of the polyethylene. After application of a pressure to the powder polyethylene to adjust its density, it was sintered. The sintered product was cooled gradually at room temperature, whereby a porous rod was obtained. The resulting rod was cut into a porous ultra-high-molecular-weight polyethylene sheet having a thickness of 2 mm, compressive modulus of 350 kg/cm², air permeable amount, as measured by the Frazier method, of 0.8, porosity of 28% and average pore size of 30 µm. The sheet was punched into a 2.4 mm∅ filter.

### Illustrating Example 4 (outside the scope of the claims)

An ultra-high-molecular-weight polyethylene having a viscosity-average molecular weight of 4,500,000 was filled in a mold, followed by heating for 6 hours at a temperature a little lower than the melting point of the polyethylene. After application of a pressure to the powder polyethylene to adjust its density, it was sintered. The sintered product was cooled gradually at room temperature, whereby a porous rod was obtained. The resulting rod was cut into a porous ultra-high-molecular-weight polyethylene sheet having a thickness of 1 mm, compressive modulus of 350 kg/cm², air permeable amount, as measured by the Frazier method, of 1.7, porosity of 35% and average pore size of 30 µm. The sheet was punched into a 2.4 mmØ filter.

### Illustrating Example 5 (outside the scope of the claims)

An ultra-high-molecular-weight polyethylene having a viscosity-average molecular weight of 6,000,000 was filled in a mold, followed by heating for 6 hours at a temperature a little lower than the melting point of the polyethylene. After application of a pressure to the powdery polyethylene to adjust its density, it was sintered. The sintered product was cooled gradually at room temperature, whereby a porous rod was obtained. The resulting rod was cut into a porous ultra-high-molecular-weight polyethylene sheet having a thickness of 3 mm, compressive modulus of 350 kg/cm², air permeable amount, as measured by the Frazier method, of 3, porosity of 35% and an average pore size of 35 µm. The sheet was punched into a 2.4 mmØ filter.

### Example 6

Onto the upper surface of the 0.1 mm-thick porous ultra-high-molecular-weight sheet obtained in Example 2, a nonwoven cloth was thermolaminated, whereby a composite sheet of 1.5 mm thick was obtained. The sheet was punched into a filter of 2.4 mmØ.

### Comparative Example 1

A filter made of a polyethylene terephthalate fiber bundle and having a thickness of 3 mm and an outer diameter of 2.4 mm∅ was used.

### Comparative Example 2

A filter made of cellulose and having a thickness of 3.5 mm and an outer diameter of 2.4 mm∅ was used.

Per each of the filters obtained in the above-described examples and comparative examples, five lots (one lot consisting of 96 filters) were produced (480 filters in total). With forceps, each of the filters was attached to the inside of a polycarbonate-made dropper type tip having a height of 53 mm. The position of the filter was measured after several hours.

The filter positioned within 8.5 mm from the upper end was ranked as a, that positioned between 8.5 to 9.5 mm was ranked as b, that positioned between 9.5 to 10.5 mm was ranked as c, that positioned between 10.5 mm to 11. 5 mm was ranked as d and that positioned at 11.5 mm or greater from the upper end was ranked as e. The distribution of the above-described results is shown in Table 1.

**Table 1**

| Position | a | b | c | d | e |
|---|---|---|---|---|---|
| Example 1* | 0 | 0 | 480 | 0 | 0 |
| Example 2* | 0 | 0 | 0 | 480 | 0 |
| Example 3* | 0 | 0 | 480 | 0 | 0 |
| Example 4* | 0 | 0 | 0 | 480 | 0 |
| Example 5* | 0 | 480 | 0 | 0 | 0 |
| Example 6 | 0 | 0 | 480 | 0 | 0 |
| Comp. Ex. 1 | 0 | 127 | 253 | 77 | 23 |
| Comp. Ex. 2 | 3.3 | 215 | 162 | 64 | 0 |

| | | | | | |
|---|---|---|---|---|---|
| * outside the scope of the claims | | | | | |

As is apparent from Table 1, 480 samples are all positioned at the same height, thus exhibiting high positioning accuracy, while the fixed position scatters widely in Comparative Examples 1 and 2.

From the above results, it can be confirmed that the porous sintered resin filter according to the present invention can be attached to a desired position inside of a pipette with high precision.

After the filters obtained in Examples and Comparative Examples were dried sufficiently, they were heated in an autoclave of 121°C for about 1 hour and existence of shrinkage was observed. The position of each of the filters obtained in illustrating Examples 1 to 5 and Example 6 did not show any change from the first attached position, while each of the filters obtained in Comparative Examples shrank and the attached position differed before and after the heating.

From the above-described observation results, it can be confirmed that the attached position of the porous sintered resin filter according to the present invention was maintained with high precision even after autoclave treatment.

In order to evaluate alcohol absorption, an alcohol solution was drawn by suction into a pipette having a filter attached thereto until it was brought into contact with the front surface of the filter. Two seconds after the solution was released, the weight of the filter was measured. The weight difference before and after the release of the solution is shown in Table 2.

**Table 2**

| Weight difference | ≤ 0.1 g | 0.1 to 0.3 g | 0.3 to 0.6 g | ≥ 0.6 g |
|---|---|---|---|---|
| Example 1* | 428 | 52 | 0 | 0 |
| Example 2* | 458 | 22 | 0 | 0 |
| Example 3* | 439 | 41 | 0 | 0 |
| Example 4* | 463 | 17 | 0 | 0 |
| Example 5* | 413 | 67 | 0 | 0 |
| Example 6 | 445 | 35 | 0 | 0 |
| Comp. Ex. 1 | 0 | 356 | 119 | 5 |
| Comp. Ex. 2 | 0 | 327 | 131 | 22 |

| | | | | |
|---|---|---|---|---|
| * outside the scope of the claims | | | | |

From the measuring results in Table 2, it has been found that the pipette equipped with the filter of the present invention permits good dispensation while preventing the penetration of a solvent even if a test solution is an alcohol solvent type.

The pipette according to the present invention is equipped with a porous sintered resin filter. Since the porous sintered resin filter can be fixed to the inside of the pipette with high fixing strength owing to its large compressive modulus and the fixed state can be maintained stably against the suction pressure, a constant amount of a test solution can be stored stably in a dispensing space upstream of the filter. In addition, since the filter can be attached to the inside of the pipette with markedly high positioning accuracy, the volume of the dispensing space can be set at a predetermined volume with high precision and this volume can be maintained permanently during dispensation, which permits highly precise dispensation.

When the pipette is used in repetition after exposure to electron beams or autoclave treatment, since the residual stress of the porous sintered resin filter is substantially zero and it has excellent size stability against heating, the attached position to the inside of the pipette can be maintained even after autoclave treatment and highly precise dispensation of a fixed amount can be maintained.

In particular, a porous sintered resin filter made of an ultra-high-molecular-weight polyethylene has excellent solvent resistance, acid resistance, alkali resistance, hygienic properties and radiation resistance and in addition, is free from the problems of the conventional resin bundle filter such as dusting due to cutting of fibers.

## Claims

1. A pipette comprising:
a dropper-type tip (1); and
a filter comprising a porous sintered resin (2),
wherein the filter is attached to the inside of the tip (1),
wherein the filter further comprises a nonwoven fabric (21) attached to the front surface of a porous sintered resin (2) so as to form a composite filter.

2. A pipette filter comprising a porous sintered resin (2),
wherein the filter is suitable to be attached to the inside of a pipette tip (1), and
wherein the filter further comprises a nonwoven fabric (21) attached the front surface of a porous sintered resin (2) so as to form a composite filter.

3. A pipette filter according to claim 2, wherein the porous sintered resin (2) is a polyolefin.

4. A pipette filter according to claim 2, wherein the polyolefin is an ultra-high-molecular-weight polyethylene or polypropylene.

5. A pipette filter according to claim 4, wherein the ultra-high-molecular-weight polyethylene or polypropylene has a viscosity-average weight of 500,000 to 10,000,000.

6. A pipette filter according to claim 2, wherein the porous sintered resin (2) has a compressive modulus of 100 to 1000 kg/cm².

7. A pipette filter according to claim 2, wherein the porous sintered resin (2) has an average pore size of the porous sintered resin (2) of 10 to 100 µm.

8. A pipette filter according to claim 2, wherein the porous sintered resin (2) has an air permeable amount of 0.5 to 20 cc/cm² · sec, as measured by the Frazier method.

9. Use of the pipette filter of any of claims 2 to 8 as a recyclable pipette in a liquid suction apparatus.

## Patentansprüche

1. Eine Pipette umfassend:
eine Spitze (1) vom Tropf-Typ; und
einen Filter, umfassend ein poröses gesintertes Harz (2),
wobei der Filter an der Innenseite der Spitze (1) befestigt ist,
wobei der Filter weiterhin ein nicht gewebtes Fasermaterial (21) umfasst, befestigt an der Vorderseitenoberfläche des porösen gesinterten Harzes (2), um einen Kompositfilter zu bilden.

2. Ein Pipettenfilter umfassend ein poröses gesintertes Harz (2), wobei der Filter geeignet ist, um auf der Innenseite einer Pipettenspitze (1) befestigt zu werden, und wobei der Filter weiterhin ein nicht gewebtes Fasermaterial (21) umfasst, befestigt an der Vorderseitenoberfläche des porösen gesinterten Harzes (2), um einen Kompositfilter zu bilden

3. Ein Pipettenfilter gemäß Anspruch 2, worin das poröse gesinterte Harz (2) ein Polyolefin ist.

4. Ein Pipettenfilter gemäß Anspruch 2, worin das Polyolefin Polyethylen oder Polypropylen mit ultrahohem Molekulargewicht ist.

5. Ein Pipettenfilter gemäß Anspruch 4, worin das Polyethylen oder Polypropylen mit ultrahohem Molekulargewicht ein viskositätsmittleres Gewicht von 500.000 bis 10.000.000 hat.

6. Ein Pipettenfilter gemäß Anspruch 2, worin das poröse gesinterte Harz (2) ein Kompressionsmodul von 100 bis 1000 kg/cm² hat.

7. Ein Pipettenfilter gemäß Anspruch 2, worin das poröse gesinterte Harz (2) eine mittlere Porengröße des porösen gesinterten Harzes (2) von 10 bis 100 µm hat.

8. Ein Pipettenfilter gemäß Anspruch 2, worin das poröse gesinterte Harz (2) einen luftdurchlässigen Anteil von 0,5 bis 20 cc/m². Sekunde hat, gemessen mit dem Fazier-Verfahren.

9. Verwendung des Pipettenfilters gemäß einem der Ansprüche 2 bis 8 als eine wieder verwertbare Pipette in einem Flüssigkeitsansaugapparat.

## Revendications

1. Pipette comprenant :
un embout (1) de type compte-gouttes ; et
un filtre comprenant une résine frittée poreuse (2),
où le filtre est fixé à l'intérieur de l'embout (1),
où le filtre comprend, en outre, un tissu non tissé (21) fixé à la surface avant d'une résine frittée poreuse (2) de manière à former un filtre composite.

2. Filtre de pipette comprenant une résine frittée poreuse (2),
où le filtre est adéquat pour être fixé à l'intérieur d'un embout de pipette (1), et
où le filtre comprend, en outre, un tissu non tissé (21) fixé à la surface avant d'une résine frittée poreuse (2) de manière à former un filtre composite.

3. Filtre de pipette selon la revendication 2, dans lequel la résine frittée poreuse (2) est une poly(oléfine).

4. Filtre de pipette selon la revendication 2, dans lequel la poly(oléfine) est un poly(éthylène) ou un poly(propylène) de masse moléculaire ultra élevée.

5. Filtre de pipette selon la revendication 4, dans lequel le poly(éthylène) ou le poly(propylène) de masse moléculaire ultra élevée a une masse moyenne en viscosité de 500 000 à 10 000 000.

6. Filtre de pipette selon la revendication 2, dans lequel la résine frittée poreuse (2) a un module de compression de 100 à 1 000 kg/cm².

7. Filtre de pipette selon la revendication 2, dans lequel la résine frittée poreuse (2) a une taille moyenne de pore de la résine frittée poreuse (2) de 10 à 100 µm.

8. Filtre de pipette selon la revendication 2, dans lequel la résine frittée poreuse (2) a une perméabilité à l'air de 0,5 à 20 cm³/cm².s, telle que mesurée par le procédé de Frazier.

9. Utilisation du filtre de pipette selon l'une quelconque des revendications 2 à 8, comme pipette recyclable dans un appareil d'aspiration de liquides.
